Europäisches Patentamt

European Patent Office

Office européen des brevets

(11) Publication number: **0 385 747**
**A2**

## EUROPEAN PATENT APPLICATION

(21) Application number: **90302124.4**

(22) Date of filing: **28.02.90**

(51) Int. Cl.5 **C09J 177/00, C09J 7/02, C08K 5/3445**

(30) Priority: **01.03.89 US 317816**

(43) Date of publication of application:
**05.09.90 Bulletin 90/36**

(84) Designated Contracting States:
**DE ES FR GB IT**

(71) Applicant: **AVERY INTERNATIONAL CORPORATION**
**150 North Orange Grove Boulevard**
**Pasadena California 91103(US)**

(72) Inventor: **Lin, Kenneth S.C.**
**2890 Duarte Road**
**San Marino, California 91108(US)**
Inventor: **Mammen, Thomas**
**1684 Lemonwood Street**
**LaVerne, California 91750(US)**

(74) Representative: **Harvey, David Gareth et al**
**Graham Watt & Co. Riverhead**
**Sevenoaks Kent TN13 2BN(GB)**

(54) Pressure-sensitive adhesive compositions and pressure sensitive adhesive label stock.

(57) A water soluble, hot-melt processable, wet-stick pressure sensitive adhesive comprises polyethyloxazoline and a plasticizer therefor, for instance N,N'-bis(2-hydroxyethyl)-dimethylhydantoin. Optionally an antioxidant is present and small amounts of rubbers and tackifiers may also be added. The adhesive is particularly useful for high speed labeling of cold and/or wet substrates, and labels applied to such substrates are readily removable, subsequently, with the aid of a polar solvent such as water.

EP 0 385 747 A2

## PRESSURE-SENSITIVE ADHESIVE COMPOSITIONS AND PRESSURE-SENSITIVE ADHESIVE LABEL STOCK

This invention relates to pressure-sensitive adhesive compositions, and more particularly, wet-stick, hot-melt processable pressure-sensitive adhesives. The invention also relates to pressure-sensitive adhesive label stock.

Conventional pressure-sensitive adhesives are hydrophobic in nature. As such, they adhere poorly to wet or damp surfaces and cannot generally be effectively removed by water, even using automated cleaning procedures which employ detergents, warm water, and/or mild caustics.

While water resistance of conventional pressure-sensitive adhesives is an obvious advantage to many end use applications, there are certain applications where it is desired to have an adhesive adhere to a wet surface. For instance, in the pharmaceutical and beverage industries, it is frequently desirable to label bottles and other containers in-line immediately after washing and rinsing processes, while the containers are still surface-wet. A second example arises where the substrate to be labeled is colder than the surrounding environment and condensation has formed thereon. In these applications conventional pressure-sensitive adhesives simply will not adhere satisfactorily.

Several attempts have been made to develop water-soluble, pressure-sensitive adhesives, but the adhesives heretofore known have suffered from deficiencies in performance, which has retarded their utility.

Adhesives based on polyvinyl methyl ether were among the earliest water-soluble, pressure-sensitive adhesives. While they had fair adhesive properties and could be used for limited applications, several deficiencies restricted their utility. They did not, for instance, absorb water rapidly enough to adhere to a wet surface. In addition, they were insoluble in hot water, and could not be removed by commercial cleaning equipment. Also, their lack of holding power under stress prohibited use on small-diameter cylindrical objects where the paper facestock used was conventional.

Other water-soluble, pressure-sensitive adhesives have been developed which include compounds of polyvinyl pyrrolidone with water-soluble plasticizers, copolymers of acrylic acid and alkyl acrylates and others, but none has had the desired good pressure-sensitive adhesive properties, rapid adhesion to wet surfaces and easy removability in commercial equipment.

A need therefore exists for an adhesive which has good adhesion to both wet and dry surfaces, whether cold or warm, whether small diameter or otherwise, and which can be easily removed with the application of water.

According to the present invention, there is provided a water-soluble, hot-melt processable, wet-stick pressure-sensitive adhesive composition comprising:

a water-soluble polymer selected from low molecular weight polyethyloxazoline, e.g. having a molecular weight of about 50,000, medium molecular weight polyethyloxazoline, e.g. having a molecular weight of about 200,000, high molecular weight polyethyloxazoline, e.g. having a molecular weight of about 500,000, and mixtures thereof; and

a plasticizing agent for the polyethyloxazoline.

For example, the invention provides a water-soluble, hot-melt processable, wet-stick pressure-sensitive adhesive composition comprising, based on the total weight of the dry adhesive:

(a) from about 25 to about 75 percent by weight of a water-soluble polymer selected from low molecular weight polyethyloxazoline, e.g. having a molecular weight of about 50,000, medium molecular weight polyethyloxazoline, e.g. having a molecular weight of about 200,000, high molecular weight polyethyloxazoline, e.g. having a molecular weight of about 500,000, and mixtures thereof; and

(b) a total of from about 25 to about 75 percent by weight of a plasticizing agent for the polyethyloxazoline.

The invention also provides a label stock featuring an adhesive composition in accordance with either of the foregoing paragraphs. Thus, for instance, the invention provides a pressure-sensitive adhesive label stock comprising a face material laminated to a release liner by an adhesive which is a water-soluble, hot-melt processable, wet-stick pressure-sensitive composition comprising, based on the total weight of dry adhesive:

(a) from about 25 to about 75 percent by weight of a water-soluble polymer selected from low molecular weight polyethyloxazoline, e.g. having a molecular weight of about 50,000, medium molecular weight polyethyloxazoline, e.g. having a molecular weight of about 200,000, high molecular weight polyethyloxazoline, e.g. having a molecular weight of about 500,000, and mixtures thereof; and

(b) from about 75 to about 25 percent by weight of N,N'-bis(2-hydroxyethyl)-dimethylhydantoin.

The invention is based on the finding that pressure-sensitive adhesives of the desired properties can be formulated from essentially two components. The first component is polyethyloxazoline ("PEOX"), a water-

2

soluble polymer. Preferably, a mixture of low, medium and/or high molecular weight PEOX is used, providing balanced adhesive performance and melt viscosity.

The second component is a plasticizer; preferably N,N´-bis(2-hydroxyethyl)-dimethylhydantoin (sold commercially as "Dantocol DHE"), a high boiling point, water miscible liquid. The plasticizer lowers the glass transition temperature of the first component.

A small amount of an elastomer or rubber, such as a styrene-isoprene-styrene block copolymer, is preferably added to reduce cold flow tendencies of the adhesive composition. A tackifier for the elastomeric block copolymer may be present and an antioxidant may also be added, as desired.

In the presently preferred composition, the total weight percent of PEOX ranges from about 50 to about 70 percent of the total composition. A blend of low and high molecular weight PEOX is used, e.g. PEOX 50, PEOX 200, and/or PEOX 500 (a polyethyloxazoline blend of polymers having molecular weights of about 50,000, about 200,000, and about 500,000, respectively). Dantocol DHE comprises from about 30 to about 50 weight percent of the formulation. Kraton 1107 (a styrene-isoprene-styrene block copolymer), if present, comprises from 0 to about 20, preferably 2 to about 8 weight percent of the total composition. The tackifiers for the Kraton may be present in like quantities. An antioxidant such as Irganox 1010 may be present in an amount of less than or equal to 2 percent.

The formulations can be solvent compounded and cast, or alternatively, they can desirably be hot-melt compounded and coated. The adhesive compositions form clear films when coated on smooth materials, and yield face-staining resistance when coated on porous face stock, such as paper.

The adhesive compositions can be used to manufacture labels and tapes that readily bond to cold, wet surfaces, and yet are readily peeled off a substrate by application of water to the adhesive substrate interface. The benefit of high-speed labeling of cold-wet substrates is thus accomplished. Labels made with the adhesive compositions of the present invention have a high peel strength when the adhesive is aged at ambient conditions, and, therefore, can be effectively used on small-diameter cylindrical objects without lifting with the passing of time.

The invention will now be explained in more detail in the following non-limitative description, which is given by way of example of the invention.

There is provided, according to the invention, an essentially two-component adhesive system comprised of two constituents, neither of which is a pressure-sensitive adhesive in nature but which in combination provide a pressure-sensitive adhesive system which can be applied to wet surfaces by conventional means with permanence of adhesion, and yet which is readily removable by application of water. Preferably, the system contains an elastomer, a tackifier for the elastomer and an antioxidant.

The first component of the system is at least one polyethyloxazoline (called "PEOX" herein). PEOX, are amorphous, linear, tertiary amide polymers, soluble in water and other polar solvents. Preferably, a mixture of low and high molecular weight PEOX polymers are used. The tackiness, mechanical strength, and melt viscosity of the adhesive compositions comprising the present invention can be modified by choosing an appropriate ratio of low to high molecular weight PEOX. Representative molecular weights are about 50,000, about 200,000, and about 500,000 (PEOX 50, PEOX 200, and PEOX 500, respectively).

When a combination is used for the adhesive composition, the higher molecular weight PEOX controls the rate at which water is absorbed from a substrate. This enables water to be absorbed from a substrate without loss of tack. The lower molecular weight PEOX acts synergistically to balance the high molecular weight PEOX by affording fast water pickup without loss of quick-stick to enable attachment of adhesive labels to a moist substrate by high speed label application machinery.

The second component of the system is a plasticizer; preferably N,N´-bis(2-hydroxyethyl)-dimethylhydantoin, a high boiling point, water miscible liquid, sold commercially by Glyco, Inc., as "Dantocol DHE".

In addition to polyethyloxazolines and N,N´-bis(2-hydroxyethyl)-dimethylhydantoin, an elastomer or rubber is preferably added to the formulation to reduce the cold flow tendency of the adhesive. A preferred elastomer is a styrene-isoprene-styrene block copolymer, such as Kraton 1107 (manufactured and sold by Shell Chemical Co.). A solid and/or liquid tackifier for the elastomer, such as Wingtack 95 and Wingtack 10 (C5 hydrocarbon resins manufactured and sold by Goodyear Tire & Rubber Co.) may also be added. Wingtack 95 is a solid at room temperature; Wintack 10 is a liquid. Preferably, an antioxidant such as Irganox 1010 (manufactured and sold by Ciba-Geigy) is added to help maintain the viscosity, color, and odor of the adhesive. Fillers and the like may also be added.

The acceptable and preferred adhesive compositions are set forth in Table 1.

Table 1

| Component | Acceptable Range[1] | Preferred Range[1] |
|---|---|---|
| PEOX[2] | 25-75 | 50-70 |
| Dantocol DHE[3] | 25-75 | 30-50 |
| Kraton 1107[4] | 0-20 | 2-8 |
| Wingtack 95[5] | 0-20 | 2-8 |
| Wingtack 10[6] | 0-20 | 2-8 |
| Irganox 1010[7] | 0-2 | 0.5-2 |

(1) Percent by weight, based on total adhesive composition.
(2) A blend of PEOX 50, PEOX 200, and PEOX 500, manufactured and sold by Dow Chemical Co.
(3) N,N'-bis(2-hydroxyethyl)-dimethylhydantoin, manufactured and sold by Glyco, Inc.
(4) A styrene-isoprene-styrene block copolymer, manufactured and sold by Shell Chemical Co.
(5) A $C_5$ hydrocarbon resin, which is solid at 25° C, manufactured and sold by Goodyear Tire and Rubber Co.
(6) A $C_5$ hydrocarbon resin, which is liquid at 25° C, manufactured and sold by Goodyear Tire and Rubber Co.
(7) An antioxidant, manufactured and sold by Ciba-Geigy.

The adhesive is either formulated and cast from a polar solvent system, or hot melt compounded and coated. Representative solvents include water, methanol, and isopropanol. When coated on a smooth surface, the formulated adhesives form a clear, water-soluble film.

The adhesive formulation may be applied to one or both components of an adhesive label, i.e., the face stock or release liner. The resulting adhesive stock has excellent pressure-sensitive, quick-stick characteristics, as well as the ability to adhere to wet or dry surfaces, over a range of temperatures.

By "wet surface" as used herein there is meant a surface rinsed with a polar compound and having a residual polar compound contained thereon. Typically, the polar compounds are solvents, such as water and alcohols.

Adhesives of the present invention are adaptive to all such conditions and impart a quick, permanent adhesive tack to a substrate. They are readily formulated for use in a wide range of applications. The compositions afford permanent adhesive capability, yet are readily removable from a substrate by the application of water to the adhesive substrate interface. Because of the high peel strength that results from aging the adhesion joint at ambient conditions, labels and tapes prepared with the adhesive compositions are suitable for use on small-diameter cylindrical objects.

As stated in part, the adhesive compositions of the present invention have very good adhesion to both wet and dry surfaces. Illustrative, but in no way limiting, data are given in Table 2, wherein shear was determined by ASTMD-3654-78 and D-1000-60 and PSTC (Pressure-Sensitive Tape Council) Test #7, 6th Ed.; Looptack by PSTC Test #7, 6th Ed.; and 180° Peel by ASTM D 903-49. The particular adhesive compositions A, B, C, and D were compounded with the following formulations:

## Adhesive A

| Component | Percentage by Weight |
|---|---|
| PEOX 50[8] | 50.0 |
| PEOX 500[9] | 15.0 |
| Dantocol DHE | 35.0 |
| Irganox 1010 | 1.0 |

## Adhesive B

| Component | Percentage by Weight |
|---|---|
| PEOX 50 | 41.0 |
| PEOX 500 | 13.0 |
| Dantocol DHE | 37.0 |
| Kraton 1107 | 2.5 |
| Wingtack 95 | 3.0 |
| Wingtack 10 | 2.5 |
| Irganox 1010 | 1.0 |

## Adhesive C

| Component | Percentage by Weight |
|---|---|
| PEOX 50[8] | 47.0 |
| PEOX 200[10] | 4.0 |
| Dantocol DHE | 40.0 |
| Kraton 1107 | 2.5 |
| Wingtack 95 | 3.0 |
| Wingtack 10 | 2.5 |
| Irganox 1010 | 1.0 |

## Adhesive D

| Component | Percentage by Weight |
|---|---|
| PEOX 50 | 47.0 |
| PEOX 200[10] | 7.5 |
| Dantocol DHE | 40.0 |
| Kraton 1107 | 5.0 |
| Irganox 1010 | 0.5 |

(8) 50,000 MW polyethyloxazoline, manufactured and sold by Dow Chemical Co.

(9) 500,000 MW polyethyloxazoline, manufactured and sold by Dow Chemical Co.

(10) 200,000 MW polyethyloxazoline, manufactured and sold by Dow Chemical Co.

The adhesive compositions of the present invention may be hot-melt compounded, or solvent compounded. As a representative example, formulation A was hot-melt compounded in vacuo, at 190°C, in a two-step process. First, all of the PEOX and Irganox 1010, and one-half of the Dantocol DHE were combined in an initial addition. Second, the remaining Dantocol DHE was added. Completion time was two hours. Formulations B-D were prepared in a comparable manner.

Table 2

| Formulation | | A | B | C | D |
|---|---|---|---|---|---|
| Melt Viscosity (centipoise or mPa.s) | | | | | |
| 300°F | | 51,000 | 38,800 | 11,200 | 10,900 |
| 325°F | | 28,500 | 23,400 | 6,000 | 6,500 |
| 350°F | | 17,500 | 13,400 | 3,600 | 4,050 |
| 500g Shear (minutes) | | | | | |
| Initial | | 23 | 4 | 2 | 3 |
| 7 days, 140°F | | -- | 5 | 10 | -- |
| 14 days, RT | | 34 | -- | -- | -- |
| 14 days, 140°F | | 42 | 7 | 11 | -- |
| Loop Tack | (lb/in) | 0.01 | 0.55 | 0.23 | 0.6 |
| | [g/cm] | [0.17] | [9.53] | [3.98] | [10.39] |
| 180° Peel | (lb/in) | 2.5 | 1.7 | -- | 5.9 |
| | [g/cm] | [43.31] | [29.45] | | [102.2] |
| lb/in = pounds per inch | | | | | |

While the invention, as indicated, is primarily concerned with adhesive compositions, there is also contemplated within the scope of the invention, facestocks and their obvious sub-components, tapes and labels. For example, a pressure-sensitive adhesive label stock can be prepared by laminating a face material to a release liner with the above-described adhesive compositions. Accordingly, the foregoing description should not be read as pertaining only to the precise compositions described, but rather should be read consistent with and as support for the following claims, which are to have their fullest fair scope.

The invention embraces methods of making the water-soluble, hot-melt processable, wet-stick adhesive compositions by blending together the components as described herein and as defined hereinafter.

The invention also embraces methods of making label stock involving laminating a face material to a release liner with an adhesive composition, made as indicated hereinabove, intervening therebetween.

**Claims**

1. A water-soluble, hot-melt processable, wet-stick pressure-sensitive adhesive composition comprising: a water-soluble polymer selected from low molecular weight polyethyloxazoline, e.g. having a molecular weight of about 50,000, medium molecular weight polyethyloxazoline, e.g. having a molecular weight of about 200,000, high molecular weight polyethyloxazoline, e.g. having a molecular weight of about 500,000, and mixtures thereof; and

a plasticizing agent for the polyethyloxazoline.

2. An adhesive composition as claimed in claim 1, wherein the plasticizing agent is N,N'-bis(2-hydroxyethyl)-dimethylhydantoin.

3. An adhesive composition as claimed in claim 1 or claim 2, further comprising an antioxidant.

4. An adhesive composition as claimed in claim 1, 2 or 3, further comprising an elastomer, for example a block copolymer, such as a styrene-isoprene-styrene block copolymer.

5. An adhesive composition as claimed in claim 4, further comprising a tackifier.

6. An adhesive composition as claimed in claim 5, wherein the tackifier comprises at least one $C_5$ hydrocarbon resin.

7. A water-soluble, hot-melt processable, wet-stick pressure-sensitive adhesive composition comprising, based on the total weight of the dry adhesive:

(a) from about 25 to about 75 percent by weight of a water-soluble polymer selected from low molecular weight polyethyloxazoline, e.g. having a molecular weight of about 50,000, medium molecular weight polyethyloxazoline, e.g. having a molecular weight of about 200,000, high molecular weight polyethyloxazoline, e.g. having a molecular weight of about 500,000, and mixtures thereof; and

(b) a total of from about 25 to about 75 percent by weight of a plasticizing agent for the polyethyloxazoline.

8. An adhesive composition as claimed in claim 7, wherein the plasticizing agent is N,N'-bis(2-hydroxyethyl)-dimethylhydantoin.

9. An adhesive composition as claimed in claim 7 or claim 8, further comprising from 0 to about 20 weight percent of the adhesive of a styrene-isoprene-styrene block copolymer.

10. An adhesive composition as claimed in claim 9, further comprising from 0 to about 20 weight percent of the adhesive of a tackifier comprised of at least one $C_5$ hydrocarbon resin.

11. A water-soluble, hot-melt processable, wet-stick pressure-sensitive adhesive composition comprising, based on the total weight of the dry adhesive:

about 50 percent by weight of a polyethyloxazoline having a molecular weight of about 50,000;

about 15 percent by weight of a polyethyloxazoline having a molecular weight of about 500,000; and

about 35 percent by weight of N,N'-bis(2-hydroxyethyl)-dimethylhydantoin.

12. A water-soluble, hot-melt processable, wet-stick pressure-sensitive adhesive composition comprising, based on the total weight of the dry adhesive:

about 41 percent by weight of a polyethyloxazoline having a molecular weight of about 50,000;

about 13 percent by weight of a polyethyloxazoline having a molecular weight of about 500,000;

about 37 percent by weight of N,N'-ois(2-hydroxyethyl)-dimethylhydantoin;

about 2.5 percent by weight of a styrene- isoprene-styrene block copolymer; and

about 3 percent by weight of a $C_5$ tackifier which is solid at 25° C;

about 2.5 percent by weight of a $C_5$ tackifier which is liquid at 25° C.

13. A water-soluble, hot-melt processable, wet-stick pressure-sensitive adhesive composition comprising, based on the total weight of the dry adhesive:

about 47 percent by weight of a polyethyloxazoline having a molecular weight of about 50,000;

about 4 percent by weight of a polyethyloxazoline having a molecular weight of about 200,000;

about 40 percent by weight of a plasticizer comprising N,N'-bis(2-hydroxyethyl)-dimethylhydantoin;

about 2.5 percent by weight of a styrene-isoprene-styrene block copolymer; and

about 3 percent by weight of a $C_5$ tackifier which is solid at 25° C;

about 2.5 percent by weight of a $C_5$ tackifier which is liquid at 25° C.

14. A water-soluble, hot-melt processable, wet-stick pressure-sensitive adhesive composition comprising, based on the total weight of the dry adhesive:

about 47 percent by weight of a polyethyloxazoline having a molecular weight of about 50,000;

about 7.5 percent by weight of a polyethyloxazoline having a molecular weight of about 200,000;

about 40 percent by weight of a plasticizer comprising N,N'-bis(2-hydroxyethyl)dimethylhydantoin; and

about 5 percent by weight of a styrene-isoprene-styrene block copolymer.

15. A water-soluble, hot-melt processable, wet-stick pressure-sensitive adhesive composition comprising, based on the total weight of the dry adhesive:

about 25 to about 75 percent by weight of at least one polyethyloxazoline;

about 25 to about 75 percent by weight of N,N'-bis(2-hydroxyethyl)-dimethylhydantoin;

0 to about 20 percent by weight of a styrene-isoprene-styrene block copolymer;

0 to 20 percent by weight of a $C_5$ solid tackifier; and

0 to 20 percent by weight of a $C_5$ liquid tackifier.

16. A water-soluble, hot-melt processable, wet-stick pressure-sensitive adhesive composition comprising, based on the total weight of the dry adhesive:

about 50 to 70 percent by weight of polyethyloxazoline selected from the group having a molecular weight of about 50,000, about 200,000, about 500,000 and mixtures thereof;

about 30 to 50 percent by weight of N,N'-bis(2-hydroxyethyl)-dimethylhydantoin;

about 2 to about 8 percent by weight of a styrene-isoprene-styrene block copolymer;

about 2 to about 8 percent by weight of a $C_5$ tackifier which is solid at 25°C; and

about 2 to about 8 percent by weight of a $C_5$ tackifier which is liquid at 25°C.

17. A pressure-sensitive adhesive label stock comprising a face material laminated to a release liner by an adhesive which is a water-soluble, hot-melt processable, wet-stick pressure-sensitive composition comprising, based on the total weight of dry adhesive:

(a) from about 25 to about 75 percent by weight of a water-soluble polymer selected from low molecular weight polyethyloxazoline, e.g. having a molecular weight of about 50,000, medium molecular weight polyethyloxazoline, e.g. having a molecular weight of about 200,000, high molecular weight polyethyloxazoline, e.g. having a molecular weight of about 500,000, and mixtures thereof; and

(b) from about 75 to about 25 percent by weight of N,N'-bis(2-hydroxyethyl)-dimethylhydantoin.

18. A label stock as claimed in claim 17, further comprising an elastomer, e.g. a block copolymer, such as a styrene-isoprene-styrene block copolymer.

19. A label stock as claimed in claim 18, wherein the elastomer comprises from about 0 to about 20 weight percent of the adhesive.

20. A label stock as claimed in claim 18 or claim 19, further comprising a tackifier for the elastomer, the tackifier e.g. comprising at least one $C_5$ tackifier for the block copolymer.

9